# EUROPÄISCHE PATENTANMELDUNG

(11) **EP 1 752 858 A2**
(43) Veröffentlichungstag der Anmeldung: **14.02.2007**
(21) Anmeldenummer: 06014133.0
(22) Anmeldetag: 07.07.2006
(51) Int. Cl.: G06F 1/16

(54) **Elektronisches Gerät mit Andockstation**

(30) Priorität: 20.07.2005 DE 102005033950
(71) Anmelder: E.E.P.D Electronic Equipment Produktion & Distribution GmbH, 85258 Weichs (DE)
(72) Erfinder: Blersch, Christian, 85258 Weichs (DE)
(74) Vertreter: Roos, Peter

(57) **Zusammenfassung**

Die Erfindung betrifft ein elektronisches Gerät (10) zur Bereitstellung vorbestimmter Funktionen an einen Benutzer (1) des Geräts, mit einer Mensch-Maschine-Schnittstelle des Geräts zur Ermöglichung von funktionsbezogenen Eingaben durch den Benutzer und Ermöglichung von funktionsbezogenen Ausgaben des Geräts, einer prozessorgesteuerten Rechnereinrichtung zur Verarbeitung der Eingaben des Benutzers und Erzeugung der Ausgaben des Geräts, und Kopplungsmitteln zum elektrischen und/oder mechanischen Verbinden des Geräts mit einer dem Gerät zugeordneten Gerätehalterung (14). Um bei einem solchen Gerät eine einfachere Bedienung und einen größeren Anwendungsbereich zu ermöglichen, ist erfindungsgemäß vorgesehen, dass das Gerät Erfassungsmittel zur Erfassung des Vorliegens einer Verbindung des Geräts (10) mit der Gerätehalterung (14) aufweist und dass die prozessorgesteuerte Rechnereinrichtung bei Vorliegen der Verbindung eine Modifikation der Mensch-Maschine-Schnittstelle (12') bewirkt. Ein besonderer Vorteil besteht darin, dass die Modifikation der Mensch-Maschine-Schnittstelle (12') unter Berücksichtigung der betreffenden Verwendungsumgebung (z. B. im Kraftfahrzeug, zu Hause, etc.) gezielt angepasst werden kann, indem bei dieser Modifikation der betreffenden "Gerätehalterungstyp" vom Gerät (10) erfasst und berücksichtigt wird.

## Beschreibung

Die vorliegende Erfindung betrifft ein elektronisches Gerät zur Bereitstellung vorbestimmter Funktionen an einen Benutzer des Geräts nach dem Oberbegriff des Anspruchs 1, also mit
- einer Mensch-Maschine-Schnittstelle des Geräts zur Ermöglichung von funktionsbezogenen Eingaben durch den Benutzer und Ermöglichung von funktionsbezogenen Ausgaben des Geräts,
- einer prozessorgesteuerten Rechnereinrichtung zur Verarbeitung der Eingaben des Benutzers und Erzeugung der Ausgaben des Geräts, und
- Kopplungsmitteln zum elektrischen und/oder mechanischen Verbinden des Geräts mit einer dem Gerät zugeordneten Gerätehalterung.

Derartige Geräte sind in vielfältiger Ausführung bekannt. Beispiele hierfür sind elektronische Notizbücher (Organizer), persönliche digitale Assistenten (PDAs) und Mobiltelefone, insoweit diese Geräte Kopplungsmittel zum elektrischen und/oder mechanischen Verbinden mit einer zugeordneten (passenden) Gerätehalterung aufweisen.

Für die genannten Geräte gibt es oftmals eine in einem Kraftfahrzeug zu installierende Gerätehalterung, mittels welcher das betreffende Gerät sicher im Innenraum des Kraftfahrzeugs gehalten werden kann, wobei neben einer mechanischen Verbindung auch eine elektrische Verbindung zwischen Gerät und Halterung vorgesehen ist, z. B. um das Gerät aus dem Bordnetz mit Strom zu versorgen. Kfz-Halterungen für Mobiltelefone dienen darüber hinaus oftmals auch dazu, eine fahrzeugfeste Freisprechsprecheinrichtung für das Gerät nutzbar zu machen. Bei einigen Kfz-Halterungen für PDAs ist ein so genannter GPS-Empfänger anschließbar, um bei entsprechender Programmierung des PDA dem Fahrer Navigationsfunktionen (insbesondere eine Zielführung) bereitstellen zu können.

Bei den bekannten elektronischen Geräten, bzw. dem aus Gerät und zugehöriger Halterung gebildeten System, besitzt die Halterung neben ihrer Halterungsfunktion allenfalls Funktionen, die sich auf die Bereitstellung einer Stromversorgung und die Bereitstellung "zusätzlicher externer Gerätekomponenten" beschränken.

Nachteilig sind bei den bekannten Geräten oftmals eine mehr oder weniger umständliche Bedienung und deren eingeschränkte Verwendungsmöglichkeiten.

Es ist eine Aufgabe der vorliegenden Erfindung, bei der Bereitstellung vorbestimmter Funktionen mittels eines Geräts der eingangs erwähnten Art eine einfachere Bedienung und einen größeren Anwendungsbereich des Geräts zu ermöglichen.

Diese Aufgabe wird gelöst mit einem elektronischen Gerät nach Anspruch 1. Die abhängigen Ansprüche betreffen vorteilhafte Weiterbildungen der Erfindung.

Das erfindungsgemäße elektronische Gerät ist dadurch gekennzeichnet, dass das Gerät Erfassungsmittel zur Erfassung des Vorliegens einer Verbindung des Geräts mit der Gerätehalterung aufweist und dass die prozessorgesteuerte Rechnereinrichtung bei Vorliegen der Verbindung eine Modifikation der Mensch-Maschine-Schnittstelle bewirkt.

Für die Erfindung ist es wesentlich, dass die Gestaltung der Mensch-Maschine-Schnittstelle des Geräts nicht starr vorgegeben ist, sondern beim Verbinden des Geräts mit der zugeordneten Gerätehalterung automatisch modifiziert wird.

Hierbei ist es keineswegs ausgeschlossen und oftmals sogar sehr zweckmäßig, über die mit dem Gerät verbundene Gerätehalterung "zusätzliche externe Gerätekomponenten" und/oder "weitere Kommunikationskanäle" zwischen dem Gerät und dem Benutzer zu schaffen, wie dies an sich z. B. für ein Mobiltelefon bekannt ist, welches in einer Kfz-Halterung eingesetzt die akustische Sprachausgabe über einen in der Halterung integrierten oder an die Halterung angeschlossenen Lautsprecher ermöglicht.

Für die vorliegende Erfindung ist jedoch entscheidend, dass die dem Gerät eigene Mensch-Maschine-Schnittstelle bei Herstellung der Verbindung zwischen Gerät und Gerätehalterung automatisch verändert wird.

Der Kern der Erfindung liegt in der Erkenntnis, dass das Verbinden eines elektronischen Geräts mit einer Gerätehalterung bzw. das Trennen des Geräts von der Gerätehalterung in der Praxis oftmals mit einer Veränderung der "Funktionalitätspräferenzen des Benutzers" einhergeht. Wenn der Benutzer eines PDAs dieses Gerät beispielsweise in seinem Büro über eine als Koppeleinheit ("docking station") zu einem PC ausgebildete Gerätehalterung mit seinem PC verbindet, so könnte eine hohe Präferenz z. B. in der Synchronisierung von Kontaktdaten (Namen, Anschriften, Telefonnummern, etc.) liegen, die einerseits auf dem PC und andererseits in dem PDA gespeichert sind. Dem gegenüber dürfte es für den Benutzer in dieser Situation relativ uninteressant sein, eine auf dem PDA installierte Navigationssoftware laufen zu lassen. Diese Präferenzen des Benutzers ändern sich schlagartig, wenn dieser den PDA in eine Kfz-Halterung einsteckt. In dieser Situation wäre es wünschenswert, wenn der Zugriff auf die PDA-Navigationssoftware und die wechselseitige Kommunikation zwischen dem Gerät und dem Benutzer während des Laufs der Navigationssoftware vereinfacht sind. Genau dies vermag die Erfindung zu leisten, indem die Mensch-Maschine-Schnittstelle des PDA in geeigneter Weise modifiziert wird, insbesondere in Anpassung an Benutzerpräferenzen, die für die Verwendung des Geräts in Verbindung mit der Gerätehalterung zu erwarten sind.

Aufgrund des Umstands, dass viele Gerätehalterungen für eine bestimmte Verwendungsumgebungsart (z. B. "Mobile Verwendung", "Verwendung in privaten Räumlichkeiten", etc.) vorgesehen sind, besteht ein überraschender Vorteil der Erfindung darin, dass die Modifikation der Mensch-Maschine-Schnittstelle unter Berücksichtigung der betreffenden Verwendungsumgebung (z. B. im Kraftfahrzeug, zu Hause, etc.) gezielt angepasst werden kann, indem bei dieser Modifikation der betreffenden "Gerätehalterungstyp" vom Gerät erfasst und berücksichtigt wird.

Die Erfindung ist für viele Arten von elektronischen Geräten einsetzbar. Neben den oben bereits erwähnten Klein- und Taschencomputern und Mobiltelefonen kommen insbesondere auch so genannte Kombinationsgeräte oder Hybridprodukte in Betracht, wie sie je nach Anbieter z. B. als "Smartphones", "PDA-Phones" oder als "Feature-Phones" vertrieben werden. All diesen Geräten ist gemein, dass die Eingaben des Benutzers mittels einer prozessorgesteuerten Rechnereinrichtung zur Erzeugung der Ausgaben der Geräts verarbeitet werden, um dem Benutzer die gewünschten Funktionen bereitzustellen. Derartige prozessorgesteuerte Rechnereinrichtungen, z. B. umfassend einen Mikroprozessor, ein ROM, ein RAM, etc. sind dem Fachmann wohlbekannt und bedürfen daher hier keiner näheren Erläuterung.

Die "Mensch-Maschine-Schnittstelle des Geräts" kann von beliebigen zur Kommunikation zwischen dem Gerät und dem Benutzer geeigneten Mitteln des Geräts gebildet sein.

In einer bevorzugten Ausführungsform umfasst die Mensch-Maschine-Schnittstelle des Geräts für Eingaben des Benutzers an einem Gehäuse des Geräts angeordnete Bedienelemente (z. B. Tasten, Drehsteller, etc.) und/oder an einer berührungsempfindlichen Anzeigeeinrichtung (Bildschirm) vorgesehene Bedienfelder. Derartige Bedienfelder können in an sich bekannter Weise in beliebiger Anzahl und Anordnung durch die auf der Rechnereinrichtung laufende Software generiert werden. Die Betätigung derartiger Bedienfelder auf dem Bildschirm der Rechnereinrichtung kann durch einfachen Fingerdruck des Benutzers und/oder unter Zuhilfenahme eines für das Gerät geeigneten Eingabestifts erfolgen.

Für Ausgaben des Geräts an den Benutzer umfasst die Mensch-Maschine-Schnittstelle des Geräts bevorzugt an einem Gehäuse des Geräts angeordnete Leuchtelemente (z. B. LEDs) und/oder eine Anzeigeinrichtung (insbesondere z. B. eine berührungsempfindliche Anzeigeeinrichtung) und/oder eine Lautsprechereinrichtung (z. B. im Gehäuse integriert).

In einer bevorzugten Ausführungsform ist vorgesehen, dass die Modifikation eine Veränderung der Art und Weise des Zugangs zu und/oder der Bereitstellung wenigstens einer Funktion aus der Gesamtheit der mittels des Geräts bereitstellbaren Funktionen umfasst. Vorteilhafterweise kann damit der Umstand berücksichtigt werden, dass mit dem Verbinden des Geräts mit der Gerätehalterung typischerweise die Funktionspräferenzen des Benutzers sich ändern. Insbesondere kann vorgesehen sein, dass die Modifikation eine Veränderung einer Auswahl von für den Benutzer zugänglichen Funktionen aus der Gesamtheit der mittels des Geräts bereitstellbaren Funktionen vorsieht.

Die Modifikation kann beispielsweise insbesondere eine Veränderung einer Softwarebedienoberfläche, und/oder einer Eingabemethodik, und/oder eines Pfads und/oder Charakteristik wenigstens einer Art von Ausgaben umfassen.

Die Modifikation kann in einfacher Weise durch die auf der Rechnereinrichtung laufende Software gesteuert erfolgen.

Die Gesamtheit der mittels des Geräts bereitstellbaren Funktionen umfasst wenigstens eine Funktion aus einer der folgenden Funktionskategorien:
- Speichern und Editieren von Daten (z. B. Textverarbeitung, Tabellenkalkulation, Verwaltung von Kontaktdaten, etc.),
- Datenwiedergabe (z. B. insbesondere Wiedergabe von multimedialen Daten, Fotos, Audio, Video, z. B. gespeichert auf CDs, DVDs oder anderen austauschbaren Datenträgern wie einsteckbaren Speicherkarten),
- Kommunikation (z. B. Telefonie, E-Mail-Dienste, Faxversand und -empfang, Fernsteuerung von Geräten, Internetzugang, etc.),
- Navigation (insbesondere satelllitengestützt (z. B. GPS) und/oder auf Basis eines Mobilfunknetzes wie z. B. UMTS).

In einer bevorzugten Ausführungsform weist das Gerät wenigstens eine Einrichtung zum Datentransfer zwischen dem Gerät und einem austauschbaren Datenträger (z. B. Diskette, CD, DVD, Speicherkartenmodul, Mobilfunk-SIM-Karte, etc.) auf.

In einer besonders bevorzugten Ausführungsform weist das Gerät Identifizierungsmittel zum Auslesen einer Identifikationsinformation der Gerätehalterung auf. Solche Identifizierungsmittel gestatten vorteilhaft die Erkennung einer bestimmten Gerätehalterung bzw. eines bestimmten Gerätehalterungstyps, was wiederum, wie oben bereits erwähnt, die Realisierung einer "Umgebungssensitivität" des Geräts gestattet. Wenn die aus der Gerätehalterung ausgelesene Identifikationsinformation beispielsweise angibt, dass es sich um eine zur Verwendung in einem Kraftfahrzeug vorgesehene Gerätehalterung handelt, so kann die von der prozessorgesteuerten Rechnereinrichtung bewirkte Modifikation der Mensch-Maschine-Schnittstelle beispielsweise den Zugang, die Bedienung und die Ausgabemethodik für die bei mobiler Verwendung besonders bevorzugten Funktionen des Geräts präferieren bzw. "in den Vordergrund rücken".

Insbesondere unter diesem Gesichtspunkt der "Umgebungssensitivität" ist in einer Ausführungsform vorgesehen, dass die Art und Weise der Modifikation abhängig von der ausgelesenen Identifikationsinformation vorgesehen ist.

Die Identifikationsinformation der Gerätehalterung kann z. B. digital vorgesehen sein. Beispielsweise kann diese Information als eine elektronisch im Gerät eingespeicherte Gerätekennung nach dem USB-Standard vorgesehen sein.

Bevorzugt enthält die Identifikationsinformation eine Information über eine für die Gerätehalterung vorgesehene Verwendungsumgebungsart (z. B. mobile Verwendung, Verwendung zu Hause, Verwendung im Büro, Verwendung in öffentlichen Räumen bzw. Institutionen, etc.). Wenn die Identifikationsinformation z. B. als USB-Gerätekennung vorgesehen ist, so lässt sich in der Praxis damit eine Vielzahl von Verwendungsumgebungsarten und/oder Gerätehalterungstypen und zusätzlich z. B. eine Nachverfolgungsinformation (z. B. Seriennummer) kodieren.

Die Identifizierungsmittel des Geräts und die Erfassungsmittel des Geräts zur Erfassung des Vorliegens einer Verbindung zur Gerätehalterung können einen Steckverbinder (z. B. USB-Buchse) umfassen, der beim Verbinden des Geräts mit der Gerätehalterung zwangsweise eine elektrische Verbindung herstellt, die sowohl zur Erfassung der Verbindung als auch als Datenkommunikationsverbindung zum Auslesen der Identifikationsinformation dient.

Prinzipiell kommt es selbstverständlich in Betracht, die Erkennung einer Verbindung einerseits und die Identifikation einer Gerätehalterung bzw. eines Gerätehalterungstyps andererseits unabhängig voneinander vorzusehen, auch z. B. unter Einsatz von "mechanischen Mitteln".

Insbesondere wenn die an der Gerätehalterung abgelesene bzw. ausgelesene Identifikationsinformation der prozessorgesteuerten Rechnereinrichtung für eine an die Verwendungsumgebung angepasste Modifikation der Mensch-Maschine-Schnittstelle bereitgestellt wird, so kann diese Modifikation eine Veränderung von Eingabe- und/oder Ausgabepfaden des Geräts umfassen, die vorteilhaft mit einer Aktivierung und Deaktivierung von zusätzlichen Eingabe- und/oder Ausgabepfaden einhergehen, die von dem Benutzer über die Gerätehalterung zum Gerät oder umgekehrt verlaufen. So kann beispielsweise bei Verbindung des Geräts mit einer "Mobil-Gerätehalterung" vorgesehen sein, dass funktionsbezogene Eingaben durch den Benutzer an eigens hierfür vorgesehenen Bedienelementen der Gerätehalterung vorgenommen werden können und entsprechende Eingabepfade der Mensch-Maschine-Schnittstelle des Geräts deaktiviert werden. Die Modifikation umfasst in diesem Fall z. B. eine Deaktivierung der Eingabemethodik "berührungsempfindlicher Bildschirm", so dass der Bildschirm nicht mehr für Eingaben sondern nur mehr für Ausgaben (z. B. Text und Grafik) genutzt wird. Was die Veränderung von Ausgabepfaden anbelangt, so kann beispielsweise für den Fall einer Verbindung des Geräts mit einer "Heim-Gerätehalterung" vorgesehen sein, dass die für eine isolierte Verwendung des Geräts vorgesehene Video- und Audioausgabe mittels des Gerätebildschirms bzw. der Gerätelautsprechereinrichtung deaktiviert wird und diese Ausgabearten über geeignete Unterhaltungselektronikgeräte erfolgen, wie sie für diese Verwendungsumgebung typischerweise vorhanden sind und an die Gerätehalterung angeschlossen werden können.

In einer Weiterbildung der Erfindung ist ein System zur Bereitstellung vorbestimmter Funktionen an einen Benutzer des Systems vorgesehen, wobei das System ein elektronisches Gerät der oben beschriebenen Art so wie wenigstens eine dem Gerät zugeordnete Gerätehalterung aus einem Sortiment an Gerätehalterungstypen umfasst, und wobei die Modifikation der Mensch-Maschine-Schnittstelle des Geräts abhängig vom betreffenden Gerätehalterungstyp vorgesehen ist.

Um die gemäß der Erfindung vorgesehene Modifikation der Mensch-Maschine-Schnittstelle des Geräts vorteilhaft mit einer Aktivierung oder Deaktivierung von zusätzlichen Eingabe- oder Ausgabepfaden kombinieren zu können, ist für wenigstens einen Gerätehalterungstyp wenigstens eine Eingabe/Ausgabe-Schnittstelle an einem Gehäuse der Gerätehalterung angeordnet, die bei Vorliegen der Verbindung des Geräts mit der Gerätehalterung vom Gerät nutzbar ist. Derartige Schnittstellen können eine elektrische und/oder optische Dateneingabe bzw. Datenausgabe ermöglichen und so z. B. die Mensch-Maschine-Schnittstelle des Geräts gewissermaßen durch über die Gerätehalterung verlaufende Pfade ergänzen, bzw. zumindest teilweise, ersetzen. Auch kann über eine solche Schnittstelle eine Stromversorgung für das Gerät bzw. eine darin integrierte Energiequelle (z. B. Akku) bereitgestellt werden.

Neben der bei Herstellung bzw. Trennung einer Verbindung des Geräts mit einer Gerätehalterung bewirkten Modifikation der Mensch-Maschine-Schnittstelle des Geräts und einer gegebenenfalls vorgesehenen Aktivierung bzw. Deaktivierung von zusätzlichen Kommunikationspfaden zwischen Benutzer und Gerät ist es denkbar, irgendwelche anderen Peripherieeinrichtungen für das Gerät in der Gerätehalterung zu integrieren.

Im Hinblick auf die bevorzugte Bereitstellung von Gerätehalterungen bzw. Gerätehalterungstypen, die jeweils einer bestimmten Verwendungsumgebungsart zugeordnet sind, können beispielsweise Peripherieeinrichtungen nur in denjenigen Gerätehalterungen bzw. Gerätehalterungstypen vorgesehen sein, bei denen die Verwendungsumgebung eine Nutzbarkeit bzw. Nutzungspräferenz dieser Peripherieeinrichtungen erwarten lässt. Durch eine solche Auslagerung von funktionsbezogen nutzbaren Komponenten kann insbesondere die Komplexität des Geräts als solchem vorteilhaft verringert werden.

Beispielsweise kann es in der Praxis notwendig sein, die in dem Gerät betriebene Elektronik bei Überschreitung einer vorbestimmten Temperatur zu kühlen. Zu diesem Zweck kann beispielsweise für wenigstens einen Gerätehalterungstyp eine Lüftereinrichtung in der Gerätehalterung integriert sein, die bei Vorliegen der Verbindung des Geräts mit der Gerätehalterung zur Kühlung des Geräts nutzbar ist. In diesem Fall ist eine die Baugröße und die Kosten des Geräts erhöhende Lüftereinrichtung im Gerät selbst entbehrlich. Die Lüftereinrichtung kann genau für diejenigen Gerätehalterungstypen in die Gerätehalterung integriert sein, die eine kritisch hohe Umgebungstemperatur erwarten lassen, also z. B. Mobil-Gerätehalterungen, aber z. B. nicht Heim- oder Büro-Gerätehalterungen.

Die Erfindung wird nachfolgend anhand von Ausführungsbeispielen mit Bezug auf die beigefügten Zeichnungen näher beschrieben. Es stellen dar:
- Fig. 1: ist eine schematische Darstellung eines Multifunktionsgeräts bei isolierter Verwendung desselben,
- Fig. 2: ist eine schematische Darstellung des Geräts bei Verwendung in Verbindung mit einer Gerätehalterung,
- Fig. 3: veranschaulicht eine speziellere Ausführungsform des Multifunktionsgeräts,
- Fig. 4a bis 4c: veranschaulichen die Verwendung des Geräts von Fig. 3 in drei verschiedenen Verwendungsumgebungen,
- Fig. 5: veranschaulicht einen Videoausgabemodus des Geräts von Fig. 3 in Verbindung mit einer Heim-Gerätehalterung,
- Fig. 6: ist eine perspektivische Ansicht einer spezielleren Ausführungsform einer Gerätehalterung von vorne, und
- Fig. 7: ist eine perspektivische Ansicht der Gerätehalterung von Fig. 6 von hinten.

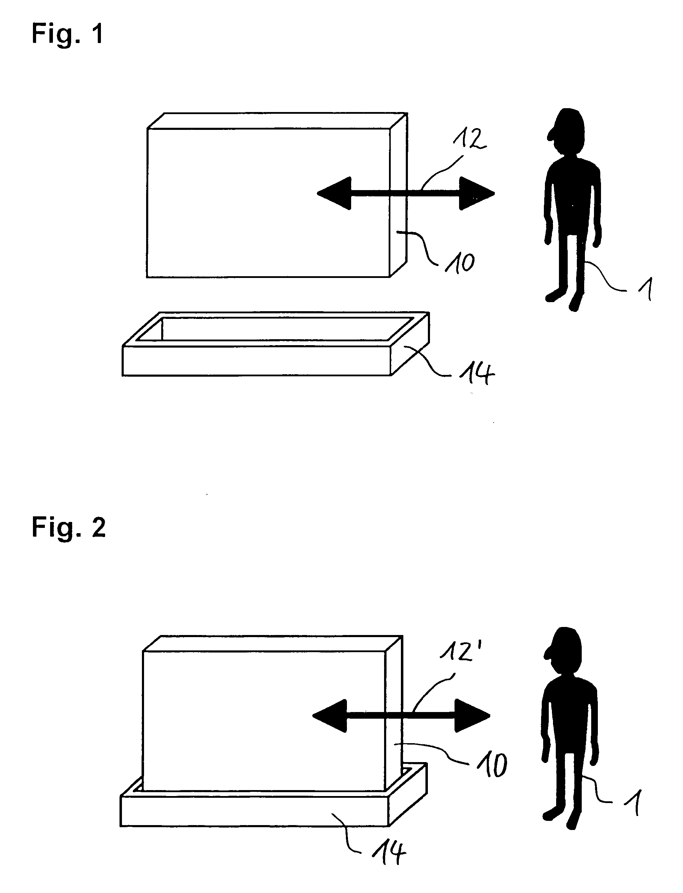

Fig. 1 zeigt ein Multifunktionsgerät 10 zur Bereitstellung von bestimmten Funktionen an einen Benutzer 1 des Geräts.

Die Gesamtheit der mittels des Geräts 10 bereitstellbaren Funktionen ist im dargestellten Ausführungsbeispiel sehr umfangreich. Dies ist dadurch realisiert, dass in dem Gerät 10 eine prozessorgesteuerte Rechnereinrichtung zur Verarbeitung von Eingaben des Benutzers und zur Erzeugung von Ausgaben des Geräts vorgesehen ist. Es handelt sich bei dem Gerät 10 um ein insgesamt etwa quaderförmiges, handliches, tragbares Computersystem, auf welchem ein gängiges Computer-Betriebssystem (z. B. "Windows Mobile" etc.) oder auch ein proprietäres Betriebssystem läuft. Das dargestellte Gerät 10 vereinigt Funktionen, wie sie von herkömmlichen "Notebook-Computern", Navigationsgeräten und Mobiltelefonen an sich bekannt sind.

Eine Mensch-Maschine-Schnittstelle des Geräts 10, die in Fig. 1 lediglich durch einen Doppelpfeil 12 symbolisiert ist, ermöglicht Eingaben durch den Benutzer 1 an das Gerät 10 und Ausgaben des Geräts 10 an den Benutzer 1, die sich auf die bereitstellbaren Funktionen beziehen.

Das Gerät 10 umfasst an seiner Unterseite ferner Kopplungsmittel zum elektrischen und/oder mechanischen Verbinden des Geräts 10 mit einer zu dem Gerät passenden Gerätehalterung 14. Diese Kopplungsmittel können beispielsweise durch eine elektrische Steckverbindung und/oder eine Formgebung des Gerätegehäuses realisiert sein, welche zu einer entsprechenden Formgebung der Gerätehalterung passt. Solche korrespondierenden Formgebungen können für eine mechanische Stabilisierung des Geräts an der Gerätehalterung oder in einer Aufnahme der Gerätehalterung sorgen. In einer Ausführungsform ist vorgesehen, dass eine lösbare mechanische Rastverbindung zwischen Gerät und Gerätehalterung verwendet wird.

Fig. 2 zeigt das Gerät 10 nach Kopplung bzw. Verbindung desselben mit der Gerätehalterung 14.

Da das Gerät 10 über eine Sensorik zur Erfassung des Vorliegens dieser Verbindung verfügt, die mit der prozessorgesteuerten Rechnereinrichtung des Geräts 10 verbunden ist, kann die Betriebssystem-Software oder eine darunter laufende Überwachungssoftware das Vorliegen der Verbindung zwischen Gerät 10 und Halterung 14 erfassen.

Bei Herstellung dieser Verbindung bewirkt die prozessorgesteuerte Rechnereinrichtung eine Modifikation der Mensch-Maschine-Schnittstelle 12 zu einer modifizierten Mensch-Maschine-Schnittstelle 12'. Durch diese Modifikation kann vorteilhaft eine Veränderung von Benutzerpräferenzen berücksichtigt werden, die beim Wechsel von der isolierten zur halterungsgestützten Verwendung des Geräts 10 typischerweise einhergeht.

Bei der nachfolgenden Beschreibung von weiteren Ausführungsbeispielen werden für analoge Komponenten die gleichen Bezugszahlen verwendet, jeweils ergänzt durch einen kleinen Buchstaben zur Unterscheidung der Ausführungsform. Dabei wird im Wesentlichen nur auf die Unterschiede zu dem bzw. den bereits beschriebenen Ausführungsbeispielen eingegangen und im Übrigen hiermit ausdrücklich auf die Beschreibung vorangegangener Ausführungsbeispiele verwiesen.

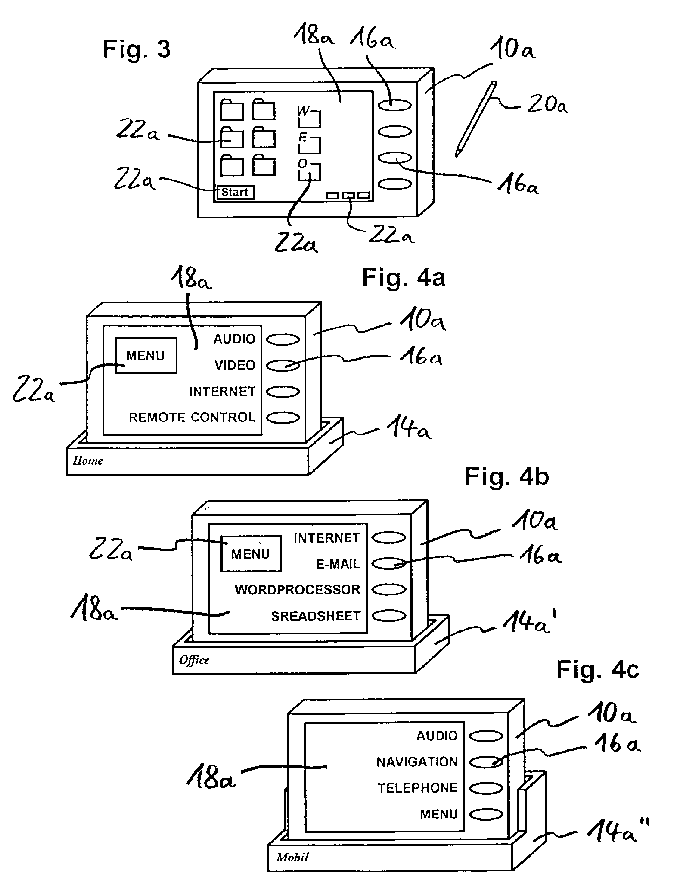

Fig. 3 zeigt eine konkretere Ausführungsform 10a des oben beschriebenen Geräts 10. Das dargestellte Gerät 10a besitzt eine Breite von ca. 15 bis 30 cm, eine Höhe von etwa 10 bis 20 cm und eine Tiefe von etwa 1 bis 4 cm und gestattet bei der in Fig. 3 dargestellten Situation einer isolierten Verwendung die Benutzung eines gängigen, grafikorientierten Betriebssystems. Zu diesem Zweck umfasst die Mensch-Maschine-Schnittstelle des Geräts 10a z. B. an der Vorderseite eines Gehäuses angeordnete Bedientasten, von denen einige in der Figur mit 16a gekennzeichnet sind. Des weiteren ist ein berührungsempfindlicher Bildschirm 18a an der Gehäusevorderseite vorgesehen, der sowohl zur Ausgabe von graphischen Informationen (einschließlich Text) als auch für Eingaben durch den Benutzer dient, sei es durch einfachen Fingerdruck oder unter Zuhilfenahme eines dem Gerät 10a zugeordneten Eingabestifts 20a. Für derartige Eingaben über den Bildschirm 18a sieht die auf der Rechnereinrichtung laufende Software eine bestimmte Anordnung von Bedienfeldern innerhalb der graphischen Bildschirmausgabe vor, von denen in der Figur einige mit 22a gekennzeichnet sind.

Ferner umfasst die Mensch-Maschine-Schnittstelle des Geräts 10a zwei unter einer Gehäuseoberfläche verdeckt angeordnete Lautsprecher, sowie an der Rückseite des Gehäuses angeordnete Anschlussbuchsen (z. B. gemäß gängigen Computer-Schnittstellenstandards) zum Anschluss externer Einrichtungen.

Die Fig. 4a, 4b und 4c veranschaulichen beispielhaft eine Modifikation der Mensch-Maschine-Schnittstelle, die von der prozessorgesteuerten Rechnereinrichtung in Reaktion auf das Einsetzen des Geräts 10a in eine dem Gerät zugeordnete Gerätehalterung 14a, 14a' bzw. 14" automatisch bewirkt wird.

Bei der in Fig. 4a dargestellten Halterung 14a handelt es sich um eine zum privaten Heimgebrauch vorgesehene Halterung, an deren Rückseite Schnittstellenanschlüsse zum Anschluss an typischerweise im privaten Bereich gebräuchliche Einrichtungen angeordnet sind. Bei diesen Einrichtungen kann es sich z. B. um Geräte der Unterhaltungselektronik wie z. B. ein Fernsehgerät oder ein Heimkinosystem handeln. Des weiteren ist beim dargestellten Ausführungsbeispiel die Anbindung der Halterung 14a an das Internet vorgesehen, sei es z. B. über den Anschluss eines externen internetfähigen Geräts an die Halterung 14a oder mittels direkter Verbindung zu einem Telefonanschluss im Heimbereich oder ein Mobiltelefon.

Eine Besonderheit des Geräts 10a besteht darin, dass durch die darauf laufende Software das Einsetzen des Geräts in die Halterung 14a erfasst wird und gleichzeitig auch eine Identifikationsinformation der als USB-Gerät konfigurierten Halterung 14a ausgelesen und von der Rechnereinrichtung ausgewertet wird. Das Gerät 10a und die Halterung 14a sind zu diesem Zweck in der in Fig. 4a dargestellten Situation über eine USB-Steckerverbindung miteinander verbunden. Als Ergebnis dieser softwaregesteuerten Auswertung legt die Rechnereinrichtung fest, in welcher Weise die Mensch-Maschine-Schnittstelle des Geräts 10a zu modifizieren ist.

Im dargestellten Ausführungsbeispiel verschwindet die graphische Benutzeroberfläche des betreffenden Betriebssystems vom Bildschirm 18a und wird durch eine vorab festgelegte Bildschirm-Benutzeroberfläche ersetzt, die in besonderer Weise an die im Heimbereich zu erwartenden Benutzerpräferenzen angepasst ist.

Im dargestellten Beispiel wird beispielsweise unmittelbar nach dem Einstecken des Geräts 10a in die Halterung 14a die Funktionalität der Bedienelemente, nämlich der Bedientasten 16a geändert. Die neuen Funktionalitäten der einzelnen Tasten 16a werden hierbei als entsprechende Bedienhinweise diesen Tasten benachbart auf dem Bildschirm 18a zur Anzeige gebracht. Im Heimbereich kann beispielsweise vorgesehen sein, dass mittels der Tasten 16a Anwendungen (Programme) aufgerufen werden, mittels welchen eine Audiowiedergabe, eine Videowiedergabe, ein Internetzugriff und eine Fernbedienungsfunktion (z. B. zur Steuerung einer Raumheizung, einer Beleuchtung oder von anderen "intelligenten" Haushaltsgeräten).

Die zur Anzahl, Anordnung und Auswahl dieser für den Heimgebrauch vereinfacht zugänglichen Funktionen aus der Gesamtheit der mittels des Geräts 10a bereitstellbaren Funktionen können selbstverständlich auch anders als hier beispielhaft beschrieben vorgesehen sein. Für die beschriebene Ausführungsform wesentlich ist lediglich die automatische Anpassung der Schnittstelle zwischen dem Benutzer und dem Gerät unter Berücksichtigung von Benutzungspräferenzen, die durch die Verwendung der betreffenden Halterung impliziert werden.

Zweckmäßigerweise sollte auch bei hergestellter Verbindung zwischen dem Gerät 10a und der Halterung 14a eine Möglichkeit zum Zugang auf möglichst viele, insbesondere alle anderen Funktionen des Geräts erhalten bleiben. Im dargestellten Beispiel wird dieser Zugang auf in der dargestellten Funktion weniger interessante Funktionen bzw. Programme über ein eigens hierfür zur Anzeige gebrachtes Bedienfeld 23a ermöglicht (in Fig. 4a links).

Wenn der Benutzer das Gerät 10a wieder aus der Halterung 14a herausnimmt, so wird die Mensch-Maschine-Schnittstelle des Geräts 10a wieder in den Ausgangszustand für die "isolierte Verwendung" (vgl. Fig. 3) gebracht.

Fig. 4b veranschaulicht die Modifikation der Benutzeroberfläche am Bildschirm 18a nach einem Einsetzen des Geräts 10a in eine Gerätehalterung 14a', die zum Gebrauch in einem Büro oder dergleichen vorgesehen ist und somit einem anderen Gerätehalterungstyp angehört. Dieser andere Halterungstyp bzw. die hierfür vorgesehene Verwendungsumgebungsart erschließt sich dem damit verbundenem Gerät 10a wieder über die USB-Verbindung (und/oder z. B. Detektion einer mechanischen Verrastung). Entsprechend der in Fig. 4a dargestellten Situation wird auch hier wieder die Mensch-Maschine-Schnittstelle modifiziert, wobei jedoch andere Programme für einen einfachen und raschen Aufruf vorgesehen sind. Im dargestellten Beispiel sind dies ein Internetzugriff, ein E-Mail-Programm, ein Textverarbeitungsprogramm und ein Tabellenkalkulationsprogramm.

Fig. 4c veranschaulicht schließlich die durch das Einsetzen des Geräts 10a in eine für den mobilen Gebrauch (z. B. im Kraftfahrzeug) vorgesehene Halterung 14a" bewirkte Modifikation der Benutzeroberfläche. Im dargestellten Beispiel sind für einen unmittelbaren Aufruf mittels der Bedientasten 16a eine Audioanlagenbedienung, eine Navigationssoftware und eine Telefonbedienung vorgesehen. Eine der Tasten 16a (in Fig. 4c ganz unten) ermöglicht den Zugriff auf ein Menü zur Anwahl weiterer Funktionen, die in der mobilen Umgebung typischerweise weniger gebräuchlich sind.

Die in den Fig. 4a, 4b und 4c dargestellten Halterungen 14a, 14' und 14a" bilden ein Sortiment an Gerätehalterungstypen (oder einen Teil davon) und sind jeweils für den Gebrauch in einer bestimmten Umgebungsverwendungsart (wie beschrieben) vorgesehen.

Prinzipiell ist es denkbar, dass für Halterungen mehrerer oder sämtlicher Halterungstypen ein und dieselbe äußere Form bzw. Gehäusekonstruktion vorgesehen wird und sich die Halterungen lediglich hinsichtlich der darin enthaltenen Komponenten (und natürlich ihrer Identifikationsinformation) unterscheiden. Auch können mit einem für mehrere Halterungstypen gemeinsam vorgesehenen Gehäusetyp bereits alle denkbaren Anschlüsse zum Anschluss externer Einrichtungen vorgesehen sein, die je nach Halterungstyp im Einzelfall tatsächlich über die Halterung mit dem Gerät in Verbindung stehen und/oder mit einer entsprechenden Elektronik in der Halterung in Verbindung stehen. Dies ist insbesondere im Hinblick auf eine vereinfachte Logistik bei der Herstellung der Gerätehalterungen von Vorteil.

So sind beispielsweise die in den Fig. 4a und 4b dargestellten Halterungen 14a und 14a' von ihrer äußeren Konstruktion her identisch. Dem gegenüber besitzt die in Fig. 4c dargestellte Mobil-Halterung 14a" abgewandelte Kopplungsmittel sowie eine höher empor ragende rückwärtige Wandung, um eine besonders stabile Lagerung des Geräts 10a in der Halterung 14a" zu gewährleisten, wie sie im mobilen Gebrauch (z. B. in einem Fahrzeug) zweckmäßig ist.

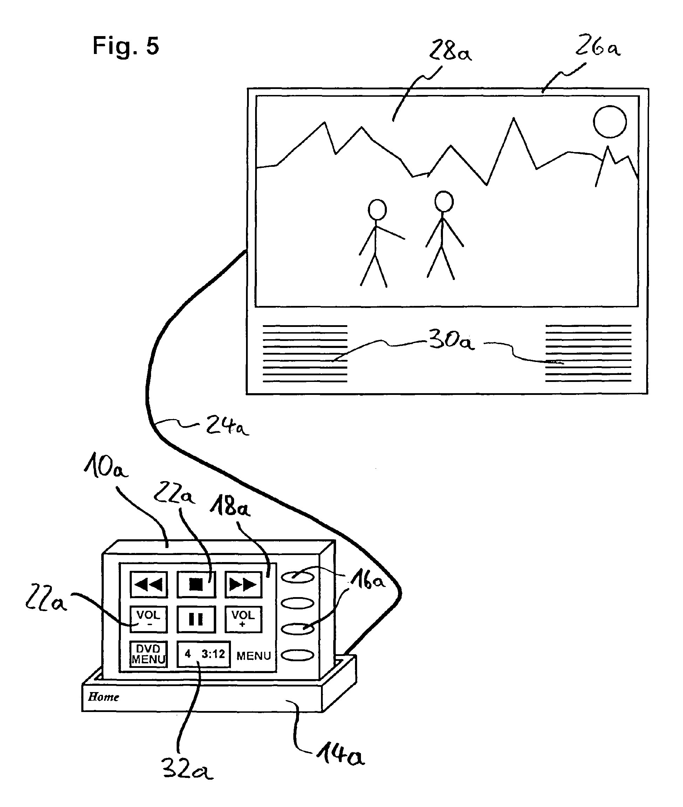

Fig. 5 veranschaulicht einen Heimkinomodus des in die Halterung 14a eingesetzten Geräts 10a am Beispiel der Wiedergabe eines auf einer DVD gespeicherten Films.

Bereits bei isolierter Verwendung des Geräts 10a kann eine solche DVD in ein (nicht dargestelltes) DVD-Laufwerk des Geräts 10a eingesetzt werden, um nach entsprechendem Aufruf eines Wiedergabeprogramms den Film wiederzugeben, wobei die Video- und Audioausgabe mittels des Bildschirms 18a bzw. der GeräteLautsprechereinrichtung erfolgen.

Bei der in Fig. 5 dargestellten Situation, in welcher die Gerätehalterung 14a über ein Schnittstellenkabel 24a mit einer externen Einrichtung (hier: Fernseher 26a) verbunden ist, ist neben einer Modifikation der Mensch-Maschine-Schnittstelle des Geräts 10a (hier: Veränderung der aus Bildschirm 18a und Bedientasten 16a gebildeten Bedienoberfläche) eine Deaktivierung der geräteeigenen Video- und Audioausgabepfade und statt dessen eine Aktivierung zusätzlicher Ausgabepfade unter Zwischenschaltung der Halterung 14a vorgesehen. Die Video- und Audiodaten werden dem Benutzer über einen Bildschirm 28a und Lausprecher 30a des Fernsehers 26a dargeboten.

Die in Fig. 5 dargestellte Bedienoberfläche am Bildschirm 18a des Geräts10a ist in der dargestellten konkreten Art einzig und allein in Verbindung mit einer Gerätehalterung des Typs "Heimgebrauch" vorgesehen. Die dargestellte Bedienoberfläche nutzt den Gerätebildschirm 18a vorteilhaft zur graphischen Darstellung der wichtigsten in dieser Situation gebrauchten Bedienfunktionalitäten mittels relativ großflächiger Bedienfelder 22a, die besonders komfortabel per Fingerdruck bedienbar sind.

Ähnlich wie mit Bezug auf die Fig. 4a bis 4c beschrieben, besteht jedoch auch die Möglichkeit für einen Zugriff auf weitere Funktionen des Geräts 10a, hier über die Betätigung der in Fig. 5 ganz unten angeordneten Bedientaste 16a, deren aktuelle Funktion durch einen entsprechenden Hinweis (hier: Text "MENU") auf dem Gerätebildschirm 18a angegeben wird.

Außerdem werden während der DVD-Wiedergabe Statusinformationen wie Kapitelnummer und Wiedergabezeit in einem eigens hierfür vorgesehenen Ausgabefeld 32a angezeigt.

Falls der Benutzer in dieser Situation das Gerät 10a wieder aus der Halterung 14a herausnimmt, werden automatisch wieder die dem Gerät 10a eigenen Ausgabepfade genutzt, d.h. die Wiedergabe erfolgt über den Gerätebildschirm 18a und die im Gerät integrierte Lautsprechereinrichtung. Damit verbunden wird die Mensch-Maschine-Schnittstelle auch im Hinblick auf die Eingaben des Benutzers wieder modifiziert, etwa dergestalt, dass die Bedientasten 16a mit geeigneten Funktionalitäten belegt werden, die auch z. B. am rechten Bildschirmrand symbolisiert werden können.

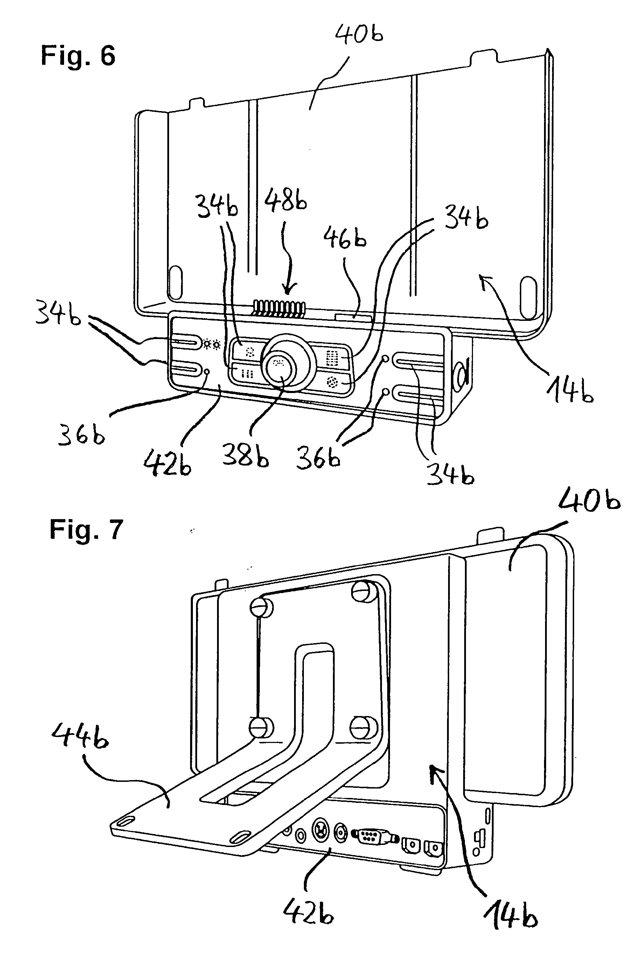

Die Fig. 6 und 7 zeigen eine Ausführungsform einer zum mobilen Gebrauch, insbesondere in einem Kraftfahrzeug, vorgesehene Gerätehalterung 14b.

Auf der Vorderseite (vgl. Fig. 6) der Mobil-Halterung 14b sind Bedientasten 34b, Hinweisleuchten 36b sowie ein zentral angeordneter Dreh-Drück-Steller 38b für den Benutzer gut zugänglich angeordnet. Mit diesen zusätzlichen Bedienelementen werden im mobilen Gebrauch des (nicht dargestellten) Geräts weitere, diesem Verwendungszweck besonders gut angepasste Eingabepfade geschaffen.

Das nicht dargestellte, mit dieser Halterung 14b zu koppelnde Gerät ist etwa rechteckigplattenförmig und auf seiner Vorderseite etwa so gestaltet, wie dies oben mit Bezug auf die Fig. 3 bis 5 bereits beschrieben wurde.

Zur stabilen Abstützung des Geräts insbesondere bei Verwendung im Armaturenbereich eines Kraftfahrzeugs besitzt die Halterung 14b eine großflächig ausgedehnte rückseitige Halterungswand 40b, auf deren Oberseite sich das Gerätegehäuse im Gebrauch abstützt. Die Halterungswand 40b schließt sich nach oben hin an einen Halterungskorpus 42b an, welcher sämtliche elektronischen Komponenten der Halterung 14b enthält, mittels welchen insbesondere eine digitale Identifikationsinformation der Halterung gespeichert wird und die Nutzung der zusätzlichen Eingabe/Ausgabemittel 34b, 36b, 38b gewährleistet wird.

Insbesondere auf der Rückseite (vgl. Fig. 7) der Gerätehalterung 14b sind Anschlussbuchsen zum Anschluss von externen Einrichtungen angeordnet. Diese Anschlussbuchsen können z. B. Schnittstellen nach gängigen Standards darstellen, etwa zum Anschluss eines Fernsehers wie oben mit Bezug auf Fig. 5 beschrieben, eines externen Computers (z. B. PC), oder anderer Einrichtungen (Lautsprecher etc.).

An der Rückseite der Halterung 14b ist eine Stütze 44b lösbar angebracht (hier: angeschraubt). Die dargestellte Stütze 44b dient zum Aufstellen des Verbunds aus dem Gerät und der Gerätehalterung 14b auf einer beliebigen ebenen Fläche. Bei einem Einsatz des Geräts in bestimmten Fahrzeugen kann die Stütze 44b somit in einfacher Weise durch eine speziell an das Fahrzeug angepasste Stütze ersetzt werden, die dann insbesondere auch im Fahrzeug geeignet befestigt sein kann.

Die elektrische Kopplung des Geräts mit der Gerätehalterung 14b erfolgt unter anderem über eine Steckereinrichtung 46b, die mit einer korrespondierenden Buchseneinrichtung des betreffenden Geräts zusammen wirkt (hier: nach USB-Standard).

Eine Besonderheit der mit den Fig. 6 und 7 veranschaulichten Ausführungsform besteht darin, dass das betreffende Gerät keinen Lüfter zur Kühlung elektronischer Gerätekomponenten aufweist, diese Gerätekomponenten jedoch über einen im Halterungskorpus 42b integrierten Lüfter gekühlt werden können, wenn das Gerät mit der Halterung 14b verbunden ist. Zu diesem Zweck sind an der Oberseite des Halterungskorpus 42b Luftaustrittsschlitze 48b vorgesehen, die mit korrespondierend angeordneten Lufteintrittsschlitzen des in die Halterung eingesetzten Geräts fluchten, so dass bei Bedarf (z. B. bei hoher Umgebungstemperatur) Kühlluft von der Halterung 14b über die Lüftungsschlitzanordnung in das Innere des Gerätegehäuses strömen gelassen werden kann. Die temperaturabhängige Ansteuerung der Kühleinrichtung (Lüfter) erfolgt softwaregesteuert durch die Rechnereinrichtung der Geräts. Diese teilweise Auslagerung der Kühlkomponenten vermindert vorteilhaft den baulichen Aufwand, bzw. die Baugröße des betreffenden Geräts.

## Patentansprüche

1. Elektronisches Gerät (10) zur Bereitstellung vorbestimmter Funktionen an einen Benutzer (1) des Geräts, mit
- einer Mensch-Maschine-Schnittstelle (12, 12') des Geräts zur Ermöglichung von funktionsbezogenen Eingaben durch den Benutzer (1) und Ermöglichung von funktionsbezogenen Ausgaben des Geräts (10),
- einer prozessorgesteuerten Rechnereinrichtung zur Verarbeitung der Eingaben des Benutzers und Erzeugung der Ausgaben des Geräts (10), und
- Kopplungsmitteln zum elektrischen und/oder mechanischen Verbinden des Geräts (10) mit einer dem Gerät zugeordneten Gerätehalterung (14),
**dadurch gekennzeichnet, dass** das Gerät (10) Erfassungsmittel zur Erfassung des Vorliegens einer Verbindung des Geräts mit der Gerätehalterung (14) aufweist und dass die prozessorgesteuerte Rechnereinrichtung bei Vorliegen der Verbindung eine Modifikation der Mensch-Maschine-Schnittstelle (12, 12') bewirkt.

2. Elektronisches Gerät nach Anspruch 1, wobei die Mensch-Maschine-Schnittstelle (12, 12') des Geräts für Eingaben des Benutzers (1) an einem Gehäuse des Geräts angeordnete Bedienelemente (16) umfasst.

3. Elektronisches Gerät (10) nach einem der vorangehenden Ansprüche, wobei die Mensch-Maschine-Schnittstelle (12, 12') des Geräts für Eingaben des Benutzers (1) an einer berührungsempfindlichen Anzeigeeinrichtung (18) vorgesehene Bedienfelder (22) umfasst.

4. Elektronisches Gerät (10) nach einem der vorangehenden Ansprüche, wobei die Mensch-Maschine-Schnittstelle (12, 12') des Geräts für Ausgaben des Geräts (10) an einem Gehäuse des Geräts angeordnete Leuchtelemente (36) umfasst.

5. Elektronisches Gerät (10) nach einem der vorangehenden Ansprüche, wobei die Mensch-Maschine-Schnittstelle (12, 12') des Geräts eine Anzeigeeinrichtung (18) umfasst.

6. Elektronisches Gerät (10) nach einem der vorangehenden Ansprüche, wobei die Mensch-Maschine-Schnittstelle (12, 12') des Geräts eine Lautsprechereinrichtung umfasst.

7. Elektronisches Gerät (10) nach einem der vorangehenden Ansprüche, wobei die Modifikation eine Veränderung der Art und Weise des Zugangs zu und/oder der Bereitstellung wenigstens einer Funktion aus der Gesamtheit der mittels des Geräts (10) bereitstellbaren Funktionen umfasst.

8. Elektronisches Gerät (10) nach einem der vorangehenden Ansprüche, wobei die Modifikation eine Veränderung einer Auswahl von für den Benutzer (1) zugänglichen Funktionen aus der Gesamtheit der mittels des Geräts (10) bereitstellbaren Funktionen vorsieht.

9. Elektronisches Gerät (10) nach einem der vorangehenden Ansprüche, wobei die Modifikation eine Veränderung einer Software-Bedienoberfläche umfasst.

10. Elektronisches Gerät (10) nach einem der vorangehenden Ansprüche, wobei die Modifikation eine Veränderung einer Eingabemethodik umfasst.

11. Elektronisches Gerät (10) nach einem der vorangehenden Ansprüche, wobei die Modifikation eine Veränderung eines Pfads und/oder einer Charakteristik wenigstens einer Art von Ausgaben umfasst.

12. Elektronisches Gerät (10) nach einem der vorangehenden Ansprüche, wobei die Gesamtheit der mittels des Geräts bereitstellbaren Funktionen wenigstens eine Funktion aus einer der folgenden Funktionskategorien umfasst:
- Speichern und Editieren von Daten,
- Datenwiedergabe,
- Kommunikation,
- Navigation.

13. Elektronisches Gerät (10) nach einem der vorangehenden Ansprüche, wobei das Gerät wenigstens eine Einrichtung zum Datentransfer zwischen dem Gerät und einem austauschbaren Datenträger aufweist.

14. Elektronisches Gerät (10) nach einem der vorangehenden Ansprüche, wobei das Gerät Identifizierungsmittel zum Auslesen einer Identifikationsinformation der Gerätehalterung aufweist.

15. Elektronisches Gerät (10) nach Anspruch 14, wobei die Art und Weise der Modifikation abhängig von der ausgelesenen Identifikationsinformation vorgesehen ist.

16. Elektronisches Gerät (10) nach Anspruch 14 oder 15, wobei die Identifikationsinformation digital vorgesehen ist.

17. Elektronisches Gerät (10) nach Anspruch 14, 15 oder 16, wobei die Identifikationsinformation eine Information über eine für die Gerätehalterung (14) vorgesehene Verwendungsumgebungsart enthält.

18. System zur Bereitstellung vorbestimmter Funktionen an einen Benutzer des Systems, wobei das System ein elektronisches Gerät (10) nach einem der Ansprüche 1 bis 17 sowie wenigstens eine dem Gerät zugeordnete Gerätehalterung (14) aus einem Sortiment an Gerätehalterungstypen umfasst und wobei die Modifikation der Mensch-Maschine-Schnittstelle des Geräts abhängig vom betreffenden Gerätehalterungstyp vorgesehen ist.

19. System nach Anspruch 18, wobei für wenigstens einen Gerätehalterungstyp wenigstens eine Eingabe/Ausgabe-Schnittstelle (42) an einem Gehäuse der Gerätehalterung (14) angeordnet ist, wobei diese Schnittstelle bei Vorliegen der Verbindung des Geräts mit der Gerätehalterung vom Gerät (10) nutzbar ist.

20. System nach Anspruch 18 oder 19, wobei für wenigstens einen Gerätehalterungstyp eine Lüftereinrichtung in der Gerätehalterung (14) integriert ist, wobei diese Lüftereinrichtung bei Vorliegen der Verbindung des Geräts (10) mit der Gerätehalterung (14) zur Kühlung des Geräts nutzbar ist.
